(19) Europäisches Patentamt
European Patent Office
Office européen des brevets

(11) **EP 2 603 716 B1**

(12) **EUROPÄISCHE PATENTSCHRIFT**

(45) Veröffentlichungstag und Bekanntmachung des Hinweises auf die Patenterteilung:
**21.01.2015  Patentblatt 2015/04**

(51) Int Cl.:
***F16F 15/26*** *(2006.01)*

(21) Anmeldenummer: **11729994.1**

(22) Anmeldetag: **07.07.2011**

(86) Internationale Anmeldenummer:
**PCT/EP2011/061468**

(87) Internationale Veröffentlichungsnummer:
**WO 2012/019831 (16.02.2012 Gazette 2012/07)**

(54) **UNWUCHTWELLE UND VERFAHREN ZU DEREN HERSTELLUNG**

UNBALANCED SHAFT AND METHOD FOR PRODUCING SAME

ARBRE À BALOURD ET SON PROCÉDÉ DE PRODUCTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.08.2010  DE 102010034289**

(43) Veröffentlichungstag der Anmeldung:
**19.06.2013  Patentblatt 2013/25**

(73) Patentinhaber: **Schaeffler Technologies GmbH & Co. KG**
**91074 Herzogenaurach (DE)**

(72) Erfinder:
• **SOLFRANK, Peter**
  **96158 Frensdorf (DE)**
• **MEDERER, Tobias**
  **90596 Schwanstetten (DE)**

(56) Entgegenhaltungen:
**DE-A1-102008 018 545**

**Beschreibung**

Die Erfindung betrifft eine Unwuchtwelle zum Ausgleich von Massenkräften und/oder Massenmomenten einer Brennkraftmaschine. Die Unwuchtwelle umfasst einen Unwuchtabschnitt, dessen Massenschwerpunkt zur Erzeugung der Wellenunwucht exzentrisch zur Drehachse der Unwuchtwelle verläuft, einen an den Unwuchtabschnitt angrenzenden Lagerabschnitt und einen damit gefügten Lagerring, dessen Außenmantelfläche als Laufbahn für die Wälzkörper eines die Unwuchtwelle drehlagernden Wälzlagers dient und dessen Innenmantelfläche in einem in Unwuchtrichtung verlaufenden Lagerumfangsbereich gegenüber dem Außenhüllkreis des Unwuchtabschnitts radial zurückspringt. Die Erfindung betrifft ferner ein Verfahren zur Herstellung einer solchen Welle.

**Hintergrund der Erfindung**

Die aus Gründen der Reibleistungsreduzierung zunehmende Umstellung von hydrodynamisch gleitgelagerten auf wälzgelagerte Unwuchtwellen zum Massenausgleich einer Brennkraftmaschine erfordert konstruktive Änderungen an den Wellen, die der spezifischen Wälzbelastung der Lagerstellen Rechnung tragen. Die erforderliche Wälzfestigkeit kann bei einteilig hergestellten Wellen üblicherweise nur durch Schmieden erzielt werden, wobei dieses Herstellverfahren gegenüber den gleitgelagerten Stahlgusswellen mit höheren Kosten verbunden ist.

Eine mehrteilige, sozusagen gebaute Unwuchtwelle der eingangs genannten Art geht aus der DE 10 2008 018 545 A1 hervor. Dort ist eine wälzgelagerte Welle aus Gusswerkstoff mit einem Lagerring aus Wälzlagerstahl vorgeschlagen, wobei der gegenüber dem angrenzenden Unwuchtabschnitt teilweise oder vollständig radial zurückspringende Lagerring in das Gusswerkzeug eingelegt und anschließend vom Wellenwerkstoff umgossen wird. Ein derartiges Verfahren zum Fügen des Lagerrings auf dem zugehörigen Lagerabschnitt der Unwuchtwelle kann jedoch mit einigen Nachteilen behaftet sein. So erfordert das Einlegen des Lagerrings in die Gussform einen entsprechend angepassten Gießprozess. Außerdem ist der eingegossene Lagerring im Hinblick auf dessen erforderliche Oberflächenqualität mechanisch nachzubearbeiten und im Hinblick auf die erforderliche Oberflächenhärte thermisch nachzubehandeln.

**Aufgabe der Erfindung**

Der vorliegenden Erfindung liegt die Aufgabe zugrunde, eine wälzgelagerte Unwuchtwelle der eingangs genannten Art, die mit vergleichsweise geringem Aufwand herstellbar ist, und ein entsprechendes Herstellverfahren anzugeben.

**Zusammenfassung der Erfindung**

Diese Aufgabe wird vorrichtungsseitig durch die Merkmale des Anspruchs 1 und verfahrensseitig durch die Merkmale des Anspruchs 8 gelöst. Demnach sollen zwecks Montage des Lagerrings auf den Lagerabschnitt die nachfolgenden geometrischen Beziehungen vorgesehen sein. Diese ermöglichen es, dass die Welle zunächst separat vom Lagerring gegossen wird und dass anschließend der Lagerring - obwohl dieser geschlossen ist und gegenüber dem angrenzenden Unwuchtabschnitt radial zurückspringt - auf die Welle montiert wird.

$$(i) \qquad d2 \geq d1$$

$$(ii) \qquad e > \tfrac{1}{2}\,(d2 - d1)$$

$$(iii) \qquad e < \tfrac{1}{2}\,(d2 + d1)$$

mit

d1 = Außenhüllkreisdurchmesser des Unwuchtabschnitts und des Lagerabschnitts,
d2 = Innendurchmesser des Lagerrings,
e = Mittelpunktsversatz zwischen d2 und d1.

Die Ungleichung (i) bewirkt, dass der Lagerring auf den Unwuchtabschnitt aufgefädelt und über den Unwuchtabschnitt bis zum Lagerabschnitt axial verschoben werden kann. Dabei ist bevorzugt eine Spielpassung zwischen dem Innendurchmesser des Lagerrings und dem gemeinsamen Außenhüllkreisdurchmesser des Unwuchtabschnitts und des Lagerabschnitts, d.h. d2 > d1 vorzusehen. Dennoch ist es je nach Querschnittsprofil des Unwuchtabschnitts auch möglich, den Lagerring unter elastischer Verformung über den Unwuchtabschnitt zu schieben, wobei dann gelten würde: d2 < d1.

Die Ungleichung (ii) ist ein Maß für den kleinsten Mittelpunktsversatz e zwischen dem Außenhüllkreisdurchmesser d1 und dem Innendurchmesser d2 und bringt zum Ausdruck, dass zumindest die Innenmantelfläche des mit dem Lagerabschnitt gefügten Lagerrings gegenüber dem Außenhüllkreis des Unwuchtabschnitts radial zurückspringt.

Die Ungleichung (iii) ist ein Maß für den größten Mittelpunktsversatz e zwischen dem Außenhüllkreisdurchmesser d1 und dem Innendurchmesser d2 und gibt an, um welchen Wert die Innenmantelfläche des mit dem Lagerabschnitt gefügten Lagerrings gegenüber dem Außenhüllkreis des Unwuchtabschnitts höchstens radial zurückspringen kann.

In Weiterbildung der Erfindung soll auch die Außenmantelfläche des Lagerrings gegenüber dem Außenhüllkreis des Unwuchtabschnitts radial zurückspringen. Dann gilt zusätzlich folgende geometrische Beziehung:

$$(iv) \quad e > \tfrac{1}{2}(d2 - d1) + s$$

mit

s = Wandstärke des Lagerrings

Das Fügen des Lagerrings mit dem Lagerabschnitt kann formschlüssig wirkend sein, indem der in dem genannten Lagerumfangsbereich an den Lagerring angrenzende Wellenwerkstoff plastisch verformt ist. Dabei kann der plastisch verformte Wellenwerkstoff die Außenmantelfläche des Lagerrings wulstförmig umgreifen (z.B. infolge eines Verstemmens) oder in jeweils eine oder mehrere Ausnehmungen an den Ringstirnflächen des Lagerrings eingreifen (z.B. infolge eines Clinchens). Zweckmäßigerweise besteht der Lagerring aus einem Wälzlagerstahl wie 100Cr6 und ist vor dessen Montage, d.h. zum Zeitpunkt des Fügens bereits gehärtet und wahlweise mit einer fertig bearbeiteten Außenmantelfläche versehen.

Alternativ kann das Fügen des Lagerrings mit dem Lagerabschnitt stoffschlüssig wirkend sein, indem der Lagerring und der Lagerabschnitt mittels einer in dem genannten Lagerumfangsbereich verlaufenden Schweißverbindung miteinander verbunden sind.

Alternativ kann das Fügen des Lagerrings mit dem Lagerabschnitt kraftschlüssig wirkend sein, indem der Lagerring und der Lagerabschnitt mittels einer in dem genannten Lagerumfangsbereich verlaufenden Presspassung miteinander gefügt sind.

Weitere alternative Befestigungsmethoden können sein: Verkleben, Verstiften, Verschrauben oder Verkeilen des Lagerrings mit dem Lagerabschnitt. In letzterem Fall kann es vorgesehen sein, auf der der Unwucht abgewandten Seite des Lagerabschnitts den Spalt zum Lagerring mit einem tragfähigen Werkstoff auszufüllen. Dies kann insbesondere ein Kunststoff sein, mit dem der Spalt ausgespritzt wird und der aufgrund seiner relativ geringen Dichte eine nur kleine Gegenunwucht erzeugt.

**Kurze Beschreibung der Zeichnungen**

Weitere Merkmale der Erfindung ergeben sich aus der nachfolgenden Beschreibung und aus den Zeichnungen, in denen Ausführungsbeispiele erfindungsgemäßer Unwuchtwellen teilweise vereinfacht oder schematisch dargestellt sind. Sofern nicht anders erwähnt, sind dabei gleiche oder funktionsgleiche Merkmale oder Bauteile mit gleichen Bezugszahlen versehen. Es zeigen:

Figur 1      eine Unwuchtwelle mit Lagerring in Fügeposition in perspektivischer Teildarstellung,

Figur 2      die Unwuchtwelle gemäß Figur 1 in axialer Draufsicht,

Figur 3      die Unwuchtwelle gemäß Figur 1 vor dem radialen Verschieben des Lagerrings in dessen Fügeposition,

Figur 4      die Unwuchtwelle gemäß Figur 3 in axialer Draufsicht,

Figur 5      eine Unwuchtwelle mit alternativ gestaltetem Unwuchtabschnitt in axialer Draufsicht,

Figur 6      eine Unwuchtwelle mit alternativ gestaltetem Lagerring in perspektivischer Teildarstellung,

Figur 7      im Längsschnitt eine erste formschlüssige Fügeverbindung des Lagerrings auf dem Lagerabschnitt,

Figur 8      im Längsschnitt eine zweite formschlüssige Fügeverbindung des Lagerrings auf dem Lagerabschnitt,

Figur 9      im Längsschnitt eine stoffschlüssige Fügeverbindung des Lagerrings auf dem Lagerabschnitt,

Figur 10      im Längsschnitt eine kraftschlüssige Fügeverbindung des Lagerrings auf dem Lagerabschnitt,

Figuren 11      in schematischer Darstellung die geometrischen Beziehungen, die für die Montage des Lagerrings auf den Lagerabschnitt erforderlich sind, und

Figur 12      in schematischer Darstellung eine Brennkraftmaschine mit bekanntem Massenausgleich zweiter Ordnung.

**Ausführliche Beschreibung der Zeichnungen**

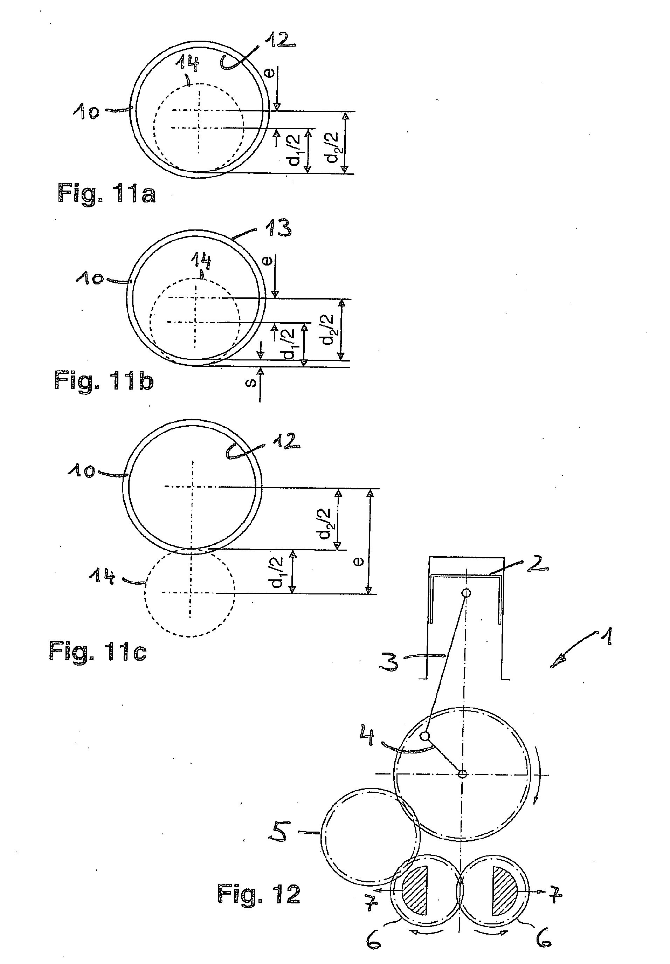

Die Erfindung sei ausgehend von Figur 12 erläutert, die anhand eines Getriebeschemas ein auch als Lancaster-Ausgleich bekanntes Massenausgleichsgetriebe einer Hubkolben-Brennkraftmaschine in Vierzylinder-Reihenbauweise zeigt. Die Brennkraftmaschine 1 umfasst die in ihren Zylindern oszillierenden Kolben 2, deren Längsbewegung über Pleuel 3 in die Rotation der Kurbelwelle 4 umgesetzt wird. Diese treibt - hier über eine Zwischenwelle 5 - zwei Unwuchtwellen 6 mit Unwuchten 7 an, wobei die Unwuchtwellen 6 parallel zur Kurbelwelle 4 mit doppelter Kurbelwellendrehzahl gegenläufig rotieren, um freie Massenkräfte zweiter Ordnung auszugleichen.

Wie nachfolgend erläutert, sieht die Erfindung eine gebaute Unwuchtwelle aus Gussstahl mit einem auf die gegossene Welle aufgezogenen und mit einem Lagerabschnitt gefügten Lagerring aus gehärtetem Wälzlagerstahl (beispielsweise der Sorte 100Cr6) vor. Die Außenmantelfläche des Lagerrings dient als dementsprechend wälzfeste Laufbahn für die Wälzkörper eines die Unwuchtwelle drehlagernden Wälzlagers und insbesondere eines Nadellagers. Die Unwuchtwelle ist derart gestaltet, dass der Lagerring gegenüber einem an den Lagerabschnitt angrenzenden Unwuchtabschnitt radial zurückspringt.

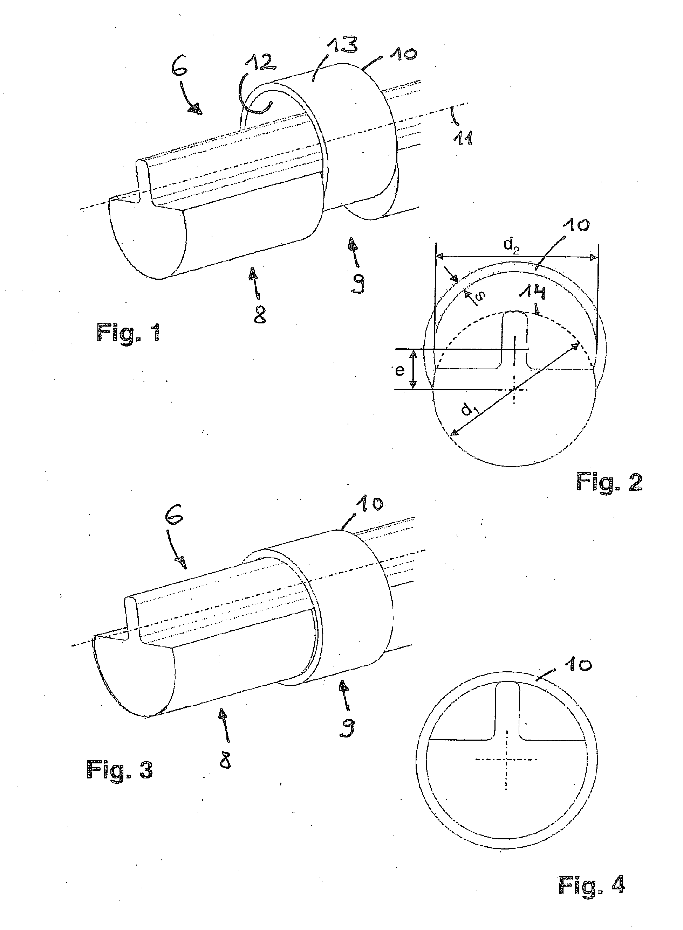

Die Figuren 1 und 2 zeigen perspektivisch bzw. in axialer Draufsicht einen Teil einer solchen Unwuchtwelle 6 mit einem Unwuchtabschnitt 8, dem daran angrenzenden Lagerabschnitt 9 und dem montierten Lagerring 10. Zur Erzeugung der Wellenunwucht 7 (s. Figur 12) verläuft der Massenschwerpunkt des Unwuchtabschnitts 8 exzentrisch zur Drehachse 11 der Unwuchtwelle 6. Der Lagerring 10 ist in dessen endgültiger Fügeposition mit dem Lagerabschnitt 9 dargestellt, in welcher sowohl die Innenmantelfläche 12 als auch die Außenmantelfläche 13 des Lagerrings 10 in dem in Unwuchtrichtung verlaufenden Lagerumfangsbereich gegenüber dem Außenhüllkreis 14 des Unwuchtabschnitts 8 radial zurückspringen. Der Lagerring 10 erreicht diese Fügeposition, indem er zunächst auf den Unwuchtabschnitt 8 aufgefädelt, dann gemäß den Figuren 3 und 4 axial bis zum Lagerabschnitt 9 und schließlich radial in dessen zurückspringende Endposition gemäß den Figuren 1 und 2 verschoben wird. Bei den genannten Bewegungsabläufen handelt es sich um prinzipielle und relative Bewegungen, so dass in einer realen Montage auch der Lagerring 10 ortsfest gehalten und die Welle 6 bewegt werden können.

Voraussetzung für das erfindungsgemäße Montageverfahren ist es, dass der Innendurchmesser d2 des Lagerrings 10 mindestens so groß ist wie der gemeinsame Außenhüllkreisdurchmesser d1 des Lagerabschnitts 9 und des Unwuchtabschnitts 8, auf dem der Lagerring 10 verschoben wird. Es gilt also die o.g. Ungleichung (i): $d2 \geq d1$. Figur 4 illustriert den Grenzfall, bei dem die Durchmesserdifferenz d2-d1 gerade so groß ist, dass der Lagerring 10 auf dem Unwuchtabschnitt 8 und dem Lagerabschnitt 9 gleitend verschiebbar ist.

Der in Figur 2 mit e bezeichnete Mittelpunktsversatz zwischen dem Außenhüllkreisdurchmesser d1 und dem Innendurchmesser d2 ist ein Maß dafür, um wie viel der mit dem Lagerabschnitt 9 gefügte Lagerring 10 gegenüber dem Außenhüllkreis 14 des angrenzenden Unwuchtabschnitts 8 radial zurückspringt. Dies sei anhand der Figuren 11a bis 11c erläutert.

Figur 11a illustriert den unteren Grenzfall der o. g. Ungleichung (ii) $e > \frac{1}{2}$ (d2-d1). Der Mittelpunktsversatz e ist dort so klein, dass in dem in Unwuchtrichtung verlaufenden Lagerumfangsbereich die Innenmantelfläche 12 des Lagerrings 10 gegenüber dem Außenhüllkreis 14 gerade noch zurückspringt.

Figur 11b illustriert den unteren Grenzfall der o. g. Ungleichung (iv) $e > \frac{1}{2}$ (d2 - d1) + s. Der Mittelpunktsversatz e ist dort so klein, dass in dem in Unwuchtrichtung verlaufenden Lagerumfangsbereich die Außenmantelfläche 13 des die Wandstärke s aufweisenden Lagerrings 10 gegenüber dem Außenhüllkreis 14 gerade noch zurückspringt.

Figur 11c illustriert den oberen Grenzfall der o. g. Ungleichung (iii) $e < \frac{1}{2}$ (d2 + d1). Der Mittelpunktsversatz e ist dort so groß, dass diametral gegenüber dem in Unwuchtrichtung verlaufenden Lagerumfangsbereich die Innenmantelfläche 12 des Lagerrings 10 gegenüber dem Außenhüllkreis 14 gerade noch radial zurückspringt.

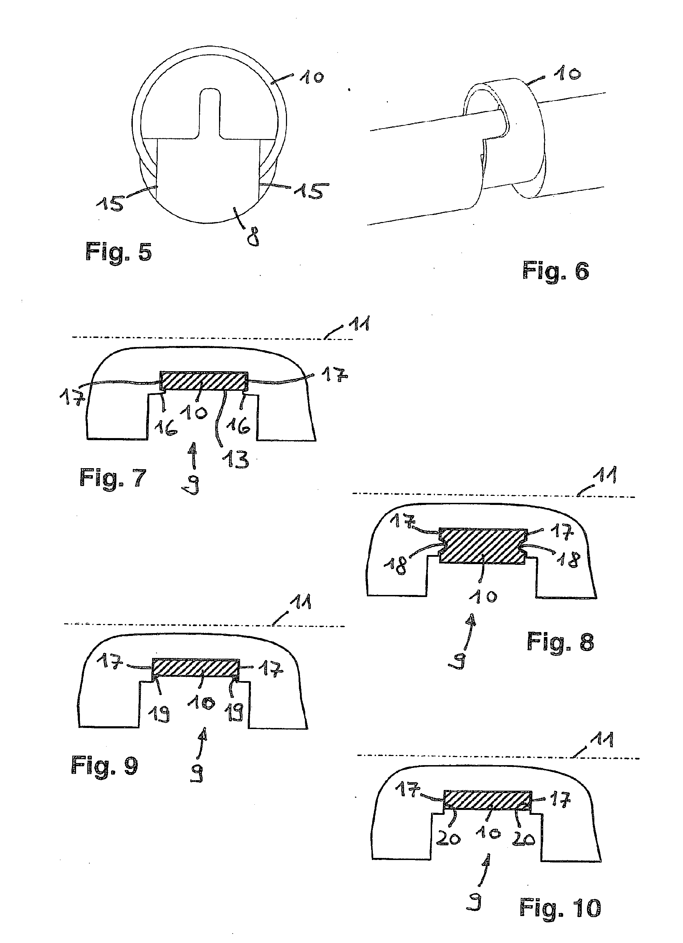

Der in Figur 5 dargestellte Unwuchtabschnitt 8, über den der Lagerring 10 gezogen wird, weist ein alternatives Querschnittsprofil mit seitlichen Abflachungen 15 auf.

Der in Figur 6 dargestellte Lagerring 10 weist eine umfangsveränderliche Breite auf, die in dem in Unwuchtrichtung verlaufenden und dort am höchsten belasteten Lagerumfangsbereich größer als diametral gegenüberliegend ist. Dies bewirkt einerseits, dass der Lagerring 10 ebenfalls zur Wellenunwucht 7 (s. Figur 12) beiträgt und andererseits, dass die auf dem Lagerring 10 abwälzenden und lokal überstehenden Nadelrollen des (nicht dargestellten) Wälzlagers mit betrieblich entstehendem Schmiermittelnebel beaufschlagt werden. Anders als dargestellt kann die umfangsveränderliche Breite auch spiegelsymmetrisch zur Quermittelebene des Lagerrings 10 ausgeführt sein. Zur Schmiermittelversorgung des Nadellagers kann alternativ oder optional auch eine (nicht dargestellte) Bohrung vorgesehen sein, die den Lagerring 10 im niedrig belasteten Lagerumfangsbereich durchsetzt.

Figur 7 zeigt eine erste formschlüssige Fügeverbindung des Lagerrings 10 mit dem Lagerabschnitt 9. In dem in Unwuchtrichtung verlaufenden Lagerumfangsbereich ist der an den Lagerring 10 angrenzende Wellenwerkstoff mittels Verstemmens plastisch zu Wülsten 16 verformt, die die Außenmantelfläche 13 des Lagerrings 10 im Bereich von dessen Ringstirnflächen 17 umgreifen.

Figur 8 zeigt eine zweite formschlüssige Fügeverbindung des Lagerrings 10 mit dem Lagerabschnitt 9. Die Wandstärke s (s. Figur 2) des Lagerrings 10 ist hier vergleichsweise groß, und dessen Ringstirnflächen 17 sind mit Ausnehmungen jeweils in Form einer umlaufenden Nut 18 versehen, in die der in diesem Fall mittels Clinchen plastisch verformte Wellenwerkstoff eingreift.

Figur 9 zeigt eine stoffschlüssige Fügeverbindung des Lagerrings 10 mit dem Lagerabschnitt 9, die mittels Schweißnähten 19 im Bereich der Ringstirnflächen 17 des Lagerrings 10 miteinander verbunden sind.

Figur 10 zeigt eine kraftschlüssige Fügeverbindung des Lagerrings 10 mit dem Lagerabschnitt 9. In dem in Unwuchtrichtung verlaufenden Lagerumfangsbereich sind die Ringstirnflächen 17 des Lagerrings 10 und diese aufnehmende Axialstirnflächen 20 des Lagerabschnitts 9 mittels einer axialen Presspassung gefügt. Der Fügeprozess kann thermisch unterstützt sein, indem der Lagerabschnitt 9 erwärmt und/oder der Lagerring 10 gekühlt werden.

**Liste der Bezugszahlen**

1   Brennkraftmaschine
2   Kolben
3   Pleuel
4   Kurbelwelle
5   Zwischenwelle
6   Unwuchtwelle
7   Unwucht
8   Unwuchtabschnitt
9   Lagerabschnitt
10  Lagerring
11  Drehachse der Unwuchtwelle
12  Innenmantelfläche des Lagerrings
13  Außenmantelfläche des Lagerrings
14  Außenhüllkreis
15  Abflachung
16  Wulst
17  Ringstirnfläche des Lagerrings
18  Nut
19  Schweißnaht
20  Axialstirnfläche

**Patentansprüche**

1.  Unwuchtwelle zum Ausgleich von Massenkräften und/oder Massenmomenten einer Brennkraftmaschine (1), mit einem Unwuchtabschnitt (8), dessen Massenschwerpunkt zur Erzeugung der Wellenunwucht (7) exzentrisch zur Drehachse (11) der Unwuchtwelle (6) verläuft, einem an den Unwuchtabschnitt (8) angrenzenden Lagerabschnitt (9) und einem damit gefügten Lagerring (10), dessen Außenmantelfläche (13) als Laufbahn für die Wälzkörper eines die Unwuchtwelle (6) drehlagernden Wälzlagers dient und dessen Innenmantelfläche (12) in einem in Unwuchtrichtung verlaufenden Lagerumfangsbereich gegenüber dem Außenhüllkreis (14) des Unwuchtabschnitts (8) radial zurückspringt, **dadurch gekennzeichnet, dass** zwecks Montage des Lagerrings (10) auf den Lagerabschnitt (9) folgende geometrische Beziehungen vorgesehen sind:

$$\text{(i)} \qquad d2 \geq d1$$

$$\text{(ii)} \qquad e > \tfrac{1}{2}\,(d2 - d1)$$

$$\text{(iii)} \qquad e < \tfrac{1}{2}\,(d2 + d1)$$

mit

d1 = Außenhüllkreisdurchmesser des Unwuchtabschnitts (8) und des Lagerabschnitts (9),
d2 = Innendurchmesser des Lagerrings (10),
e = Mittelpunktsversatz zwischen d2 und d1.

2.  Unwuchtwelle nach Anspruch 1, **dadurch gekennzeichnet, dass** auch die Außenmantelfläche (13) des Lagerrings (10) gegenüber dem Außenhüllkreis (14) des Unwuchtabschnitts (8) radial zurückspringt, wobei folgende geometrische Beziehung gilt:

$$\text{(iv)} \qquad e > \tfrac{1}{2}\,(d2 - d1) + s$$

mit

s = Wandstärke des Lagerrings (10).

3.  Unwuchtwelle nach Anspruch 1 oder 2, **dadurch gekennzeichnet, dass** der Lagerring (10) und der Lagerabschnitt (9) mittels plastischer Verformung des in dem genannten Lagerumfangsbereich an den Lagerring (10) angrenzenden Wellenwerkstoffs formschlüssig miteinander gefügt sind.

4.  Unwuchtwelle nach Anspruch 3, **dadurch gekennzeichnet, dass** der plastisch verformte Wellenwerkstoff die Außenmantelfläche (13) des Lagerrings (10) wulstförmig umgreift.

5.  Unwuchtwelle nach Anspruch 3, **dadurch gekennzeichnet, dass** der plastisch verformte Wellenwerkstoff in jeweils eine oder mehrere Ausnehmungen (18) an den Ringstirnflächen (17) des Lagerrings (10) eingreift.

6.  Unwuchtwelle nach Anspruch 1 oder 2, **dadurch gekennzeichnet, dass** der Lagerring (10) und der Lagerabschnitt (9) mittels einer in dem genannten Lagerumfangsbereich verlaufenden Schweißverbindung (19) stoffschlüssig miteinander gefügt sind.

7.  Unwuchtwelle nach Anspruch 1 oder 2, **dadurch gekennzeichnet, dass** der Lagerring (10) und der Lagerabschnitt (9) mittels einer in dem genannten Lagerumfangsbereich verlaufenden Presspassung kraftschlüssig miteinander gefügt sind.

8.  Verfahren zur Herstellung einer Unwuchtwelle zum Ausgleich von Massenkräften und/oder Massenmomenten einer Brennkraftmaschine (1), mit einem Unwuchtabschnitt (8), dessen Massenschwerpunkt zur Erzeugung der Wellenunwucht (7) exzentrisch zur Drehachse (11) der Unwuchtwelle (6) verläuft, einem an den Unwuchtabschnitt (8) angrenzenden Lagerabschnitt (9) und einem damit gefügten Lagerring (10), dessen Außenmantelfläche (13) als Laufbahn für die Wälzkörper eines die Unwuchtwelle (6) drehlagernden Wälzlagers dient und dessen Innenmantelfläche (12) gegenüber dem Außenhüllkreis (14) des Unwuchtabschnitts (8) radial zurückspringt, **dadurch gekennzeichnet, dass** der Lagerring (10) auf den Unwuchtabschnitt (8) aufgefädelt, axial bis zum Lagerabschnitt (9) und radial in dessen zurückspringende Fügeposition verschoben und dann mit dem Lagerabschnitt (9) gefügt wird, wobei zwecks Montage des Lagerrings (10) auf den Lagerabschnitt (9) folgende geometrische Beziehungen vorgesehen sind:

$$\text{(i)} \quad d2 \geq d1$$

$$\text{(ii)} \quad e > \tfrac{1}{2}\,(d2 - d1)$$

$$\text{(iii)} \quad e < \tfrac{1}{2}\,(d2 + d1)$$

mit

d1 = Außenhüllkreisdurchmesser des Unwuchtabschnitts (8) und des Lagerabschnitts (9),
d2 = Innendurchmesser des Lagerrings (10),
e = Mittelpunktsversatz zwischen d2 und d1.

**9.** Verfahren nach Anspruch 8, **dadurch gekennzeichnet, dass** der Lagerring (10) vor dessen Montage zwecks Härtesteigerung wärmebehandelt wird.


**Claims**

**1.** Unbalanced shaft for the compensation of inertia forces and/or moments of inertia of an internal combustion engine (1), with an unbalanced portion (8), the mass center of gravity of which runs eccentrically with respect to the axis of rotation (11) of the unbalanced shaft (6) for generating the shaft unbalance (7), with a bearing portion (9) adjacent to the unbalanced portion (8) and with a bearing ring (10) which is attached to this and the outer surface area (13) of which serves as a raceway for the rolling bodies of a rolling bearing rotationally supporting the unbalanced shaft (6) and the inner surface area (12) of which, in a bearing circumferential region running in the unbalanced direction, is set back radially with respect to the outer enveloping circle (14) of the unbalanced portion (8), **characterized in that**, for the purpose of mounting the bearing ring (10) onto the bearing portion (9), the following geometric relations are provided:

$$\text{(i)} \quad d2 \geq d1$$

$$\text{(ii)} \quad e > \tfrac{1}{2}\,(d2 - d1)$$

$$\text{(iii)} \quad e < \tfrac{1}{2}\,(d2 + d1)$$

with

d1 = outer enveloping circle diameter of the unbalanced portion (8) and of the bearing portion (9),
d2 = inside diameter of the bearing ring (10),
e = center offset between d2 and d1.

**2.** Unbalanced shaft according to Claim 1, **characterized in that** the outer surface area (13) of the bearing ring (10) is also set back radially with respect to the outer enveloping circle (14) of the unbalanced portion (8), where the following geometric relation applies:

$$\text{(iv)} \quad e > \tfrac{1}{2}\,(d2 - d1) + s$$

with

s = wall thickness of the bearing ring (10).

**3.** Unbalanced shaft according to Claim 1 or 2, **characterized in that** the bearing ring (10) and the bearing portion (9) are attached positively to one another by means of plastic deformation of the shaft material adjacent to the bearing ring (10) in said bearing circumferential region.

**4.** Unbalanced shaft according to Claim 3, **characterized in that** the plastically deformed shaft material surrounds the outer surface area (13) of the bearing ring (10) in the form of a bead.

**5.** Unbalanced shaft according to Claim 3, **characterized in that** the plastically deformed shaft material engages in each case into one or more recesses (18) on the ring end faces (17) of the bearing ring (10).

**6.** Unbalanced shaft according to Claim 1 or 2, **char-**

**acterized in that** the bearing ring (10) and the bearing portion (9) are attached to one another in a materially integral manner by means of a welded joint (19) running in said bearing circumferential region.

7. Unbalanced shaft according to Claim 1 or 2, **characterized in that** the bearing ring (10) and the bearing portion (9) are attached nonpositively to one another by means of a press fit running in said bearing circumferential region.

8. Method for producing an unbalanced shaft for the compensation of inertia forces and/or moments of inertia of an internal combustion engine (1), with an unbalanced portion (8), the mass center of gravity of which runs eccentrically with respect to the axis of rotation (11) of the unbalanced shaft (6) for generating the shaft unbalance (7), with a bearing portion (9) adjacent to the unbalanced portion (8) and with a bearing ring (10) which is attached to this and the outer surface area (13) of which serves as a raceway for the rolling bodies of a rolling bearing rotationally supporting the unbalanced shaft (6) and the inner surface area (12) of which is set back radially with respect to the outer enveloping circle (14) of the unbalanced portion (8), **characterized in that** the bearing ring (10) is threaded onto the unbalanced portion (8), is displaced axially as far as the bearing portion (9) and radially into its set-back attachment position and then attached to the bearing portion (9), the following geometric relations being provided for the purpose of mounting the bearing ring (10) onto the bearing portion (9):

$$(i) \quad d2 \geq d1$$
$$(ii) \quad e > \tfrac{1}{2}(d2 - d1)$$
$$(iii) \quad e < \tfrac{1}{2}(d2 + d1)$$

with

d1 = outer enveloping circle diameter of the unbalanced portion (8) and of the bearing portion (9),
d2 = inside diameter of the bearing ring (10),
e = center offset between d2 and d1.

9. Method according to Claim 8, **characterized in that** the bearing ring (10), before being mounted, is heat-treated for the purpose of increasing its hardness.

**Revendications**

1. Arbre à balourd pour équilibrer des forces d'inertie et/ou des couples d'inertie d'un moteur à combustion interne (1), comprenant une portion de balourd (8), dont le centre de gravité, pour générer le balourd de l'arbre (7), s'étend de manière excentrique par rapport à l'axe de rotation (11) de l'arbre à balourd (6), une portion de palier (9) adjacente à la portion de balourd (8) et une bague de palier (10) jointe à la portion de palier, dont la surface d'enveloppe extérieure (13) sert de piste de roulement pour les corps de roulement d'un palier à roulement supportant à rotation l'arbre à balourd (6) et dont la surface d'enveloppe intérieure (12) revient radialement en arrière dans une région périphérique de palier s'étendant dans la direction du balourd par rapport au cercle d'enveloppe extérieur (14) de la portion de balourd (8), **caractérisé en ce qu'**aux fins du montage de la bague de palier (10) sur la portion de palier (9), les relations géométriques suivantes sont prévues :

$$(i) \quad d2 \geq d1$$
$$(ii) \quad e > \tfrac{1}{2}(d2 - d1)$$
$$(iii) \quad e < \tfrac{1}{2}(d2 + d1)$$

avec

d1 = diamètre du cercle d'enveloppe extérieure de la portion de balourd (8) et de la portion de palier (9),
d2 = diamètre intérieur de la bague de palier (10),
e = décalage du centre entre d2 et d1.

2. Arbre à balourd selon la revendication 1, **caractérisé en ce que** la surface d'enveloppe extérieure (13) de la bague de palier (10) revient également radialement en arrière par rapport au cercle d'enveloppe extérieur (14) de la portion de balourd (8), la relation géométrique suivante s'appliquant :

$$(iv) \quad e > \tfrac{1}{2}(d2 - d1) + s$$

avec

s = épaisseur de paroi de la bague de palier (10).

3. Arbre à balourd selon la revendication 1 ou 2, **ca-**

**ractérisé en ce que** la bague de palier (10) et la portion de palier (9) sont assemblées l'une à l'autre par engagement par correspondance de forme au moyen d'une déformation plastique du matériau de l'arbre adjacent à la bague de palier (10) dans ladite région périphérique du palier.

4. Arbre à balourd selon la revendication 3, **caractérisé en ce que** le matériau d'arbre déformé plastiquement vient en prise à la manière d'un bourrelet autour de la surface d'enveloppe extérieure (13) de la bague de palier (10).

5. Arbre à balourd selon la revendication 3, **caractérisé en ce que** le matériau d'arbre déformé plastiquement s'engage à chaque fois dans un ou plusieurs évidements (18) au niveau des surfaces frontales annulaires (17) de la bague de palier (10).

6. Arbre à balourd selon la revendication 1 ou 2, **caractérisé en ce que** la bague de palier (10) et la portion de palier (9) sont assemblées l'une à l'autre par engagement par liaison de matière au moyen d'une connexion soudée (19) s'étendant dans ladite région périphérique du palier.

7. Arbre à balourd selon la revendication 1 ou 2, **caractérisé en ce que** la bague de palier (10) et la portion de palier (9) sont assemblées l'une à l'autre par engagement par force au moyen d'un ajustement serré s'étendant dans ladite région périphérique de palier.

8. Procédé de fabrication d'un arbre à balourd pour équilibrer les forces d'inertie et/ou les couples d'inertie d'un moteur à combustion interne (1), comprenant une portion de balourd (8), dont le centre de gravité, pour générer le balourd de l'arbre (7), s'étend de manière excentrique par rapport à l'axe de rotation (11) de l'arbre à balourd (6), une portion de palier (9) adjacente à la portion de balourd (8) et une bague de palier (10) jointe à la portion de palier, dont la surface d'enveloppe extérieure (13) sert de piste de roulement pour les corps de roulement d'un palier à roulement supportant à rotation l'arbre à balourd (6) et dont la surface d'enveloppe intérieure (12) revient radicalement en arrière par rapport au cercle d'enveloppe extérieur (14) de la portion de balourd (8), **caractérisé en ce que** la bague de palier (10) est enfilée sur la portion de balourd (8), est glissée axialement jusqu'à la portion de palier (9) et radialement dans sa position d'assemblage revenant en arrière puis est assemblée à la portion de palier (9), et aux fins du montage de la bague de palier (10) sur la portion de palier (9), les relations géométriques suivantes étant prévues :

(i) $d2 \geq d1$

(ii) $e > 1/2 (d2 - d1)$

(iii) $e < 1/2 (d2 + d1)$

avec

d1 = diamètre du cercle d'enveloppe extérieure de la portion de balourd (8) et de la portion de palier (9),
d2 = diamètre intérieur de la bague de palier (10),
e = décalage du centre entre d2 et d1.

9. Procédé selon la revendication 8, **caractérisé en ce que** la bague de palier (10) est traitée thermiquement avant son montage en vue d'accroître sa dureté.

Fig. 1

Fig. 2

Fig. 3

Fig. 4

Fig. 5

Fig. 6

Fig. 7

Fig. 8

Fig. 9

Fig. 10

Fig. 11a

Fig. 11b

Fig. 11c

Fig. 12

**IN DER BESCHREIBUNG AUFGEFÜHRTE DOKUMENTE**

**In der Beschreibung aufgeführte Patentdokumente**

- DE 102008018545 A1